# EUROPÄISCHE PATENTSCHRIFT

(11) **EP 2 066 508 B1**
(45) Veröffentlichungstag und Bekanntmachung des Hinweises auf die Patenterteilung: **29.09.2010**
(21) Anmeldenummer: 07787495.6
(22) Anmeldetag: 13.07.2007
(51) Int. Cl.: B60G 17/015, B60G 17/0185, G01M 17/04

(54) **VERFAHREN ZUR DIAGNOSE DER FUNKTION EINER NIVEAUREGELANLAGE EINES KRAFTFAHRZEUGES**
METHOD FOR DIAGNOSING THE FUNCTION OF A LEVEL CONTROL SYSTEM OF A MOTOR VEHICLE
PROCÉDÉ POUR DIAGNOSTIQUER LE FONCTIONNEMENT D'UN CORRECTEUR D'ASSIETTE D'UN VÉHICULE À MOTEUR

(30) Priorität: 16.09.2006 DE 102006043607
(43) Veröffentlichungstag der Anmeldung: 10.06.2009
(73) Patentinhaber: Continental Aktiengesellschaft, 30165 Hannover (DE)
(72) Erfinder: HEIN, Dierk, 30900 Wedemark (DE)
(74) Vertreter: Finger, Karsten
(86) Internationale Anmeldenummer: PCT/EP2007/057226
(87) Internationale Veröffentlichungsnummer: WO 2008/031656

(56) Entgegenhaltungen:
- DE-A1- 4 227 470
- DE-A1- 10 126 458
- JP-A- 62 096 126
- US-A- 4 517 832
- US-A- 5 272 647
- US-A- 6 111 514

## Beschreibung

Die Erfindung betrifft gemäß dem Oberbegriff des Anspruchs 1 ein Verfahren zur Diagnose der Funktion einer Niveauregelanlage eines Kraftfahrzeuges mit mindestens einem Ventil, wobei bei geöffnetem Ventil ein Austausch von Druckmittel von der einen Seite des Ventils zu der anderen Seite des Ventils möglich ist und bei geschlossenem Ventil ein Austausch von Druckmittel unterbunden wird, und mit einer Steuereinheit.

Aus der DE10126458C2 ist ein Verfahren zur Dichtheits- und Funktionsprüfung bekannt, bei dem in einem ersten Schritt bei geöffnetem Sperrventil an der einzelnen Gasfeder ein Hub eingestellt wird, bei dem mindestens ein Dämpfungselement komprimiert ist, bei dem in einem zweiten Schritt nach dem Schließen des Sperrventils die einzelne Gasfeder auf einen Teilhub ihres Gesamthubes zwischen den Dämpfungselementen eingestellt wird, und bei dem in einem dritten Schritt nach dem Öffnen des Sperrventils der sich einstellende Abstand zwischen Achse und Fahrzeugaufbau mit Hilfe der Messvorrichtung ermittelt wird und mit einem Sollwert verglichen wird. Nachteilig an diesem Verfahren ist, dass für die Funktionsprüfung relativ zeitaufwendige Niveauregelvorgänge durchgeführt werden müssen.

Ein Verfahren der eingangs genannten Art ist aus der Druckschrift DE19959012C2 bekannt. Das aus dieser Druckschrift bekannte Verfahren zur Steuerung und/oder Regelung des Niveaus eines Fahrzeugaufbaus eines Kraftfahrzeuges wird mittels einer Niveauregelanlage mit Stellgliedern, mit denen das Niveau des Fahrzeugaufbaus durch Ablassen eines Stellmittels aus den Stellgliedern absenkbar ist und mit einer Steuereinheit durchgeführt. Bei dem bekannten Verfahren zur Erkennung einer Fehlfunktion der Niveauregeanlage wird das Niveau des Fahrzeugaufbaus gegenüber einem Bezugspunkt ermittelt, ein Ablassvorgang eingeleitet, wenn das ermittelte Niveau über einem vorgegebenen Niveau liegt, wobei nach Einleitung des Ablassvorgangs in der Steuereinheit überprüft wird, ob sich der Fahrzeugaufbau nach einer Zeitspanne gegenüber dem unmittelbar vor dem Ablassvorgang ermittelten Niveau abgesenkt hat, und wobei die Steuereinheit den Ablassvorgang abbricht, wenn dies nicht innerhalb der Zeitspanne der Fall ist. Die Zeitspanne liegt im Bereich von mehreren Sekunden und darüber.

Nachteilig an dem bekannten Verfahren ist, dass es relativ lange dauert, bis eine fehlerhafte Funktion der Niveauregelanlage erkannt wird und das Fahrzeug innerhalb dieser Zeitspanne ggf Schaden nehmen kann. Ein Nachteil ist auch, dass eine Fehlfunktion der Niveauregelanlage nur beim Ablassen erkannt werden kann. Weiterhin lässt das bekannte Verfahren keinen Rückschluss auf die Ursache der fehlerhaften Funktion zu und bricht den Niveauregelvorgang sofort ab und lässt ggf. keinen weiteren Niveauregelvorgang zu, da die Ursache unbekannt ist. Ein nach dem bekannten Verfahren abgebrochener Ablassvorgang kann mehrere Ursachen haben, z.B. Anheben mit einem Wagenheber, das Aufliegen auf einem Gegenstand, eine verstopfte Ablassleitung oder aber auch eine defekte Steuerleitung oder ein defektes Ventil.

Die JP-A-62 096 126 (Patent Abstracts of Japan) offenbart eine Einrichtung zur Diagnose einer Fehlfunktion einer Niveauregelanlage, wobei die Einrichtung anhand von Signalen einer Höhenmesseinrichtung feststellen kann, ob eine Höhenregelungseinrichtung richtig funktioniert oder nicht und dementsprechend ein Signal an Höhenverstellventile oder Anti-Roll-Ventile abgibt, das die Niveauregelung abschaltet.

Die DE 42 27 470 A1 offenbart ein Verfahren zur Überwachung des elektrischen Stroms in elektromagnetisch gesteuerten Ventilen, bei dem die zeitliche Dauer einer Überschreitung eines Grenzwertes für den Ventilstrom oder die Anzahl von Überschreitungen des Grenzwertes in einem Zeitintervall eine Fehlermeldung erzeugen.

Die US 6,111,514 offenbart eine Regelung eines Antiblockiersystems einer Bremse, bei der die Funktionsweise eines Magnetventils dadurch überprüft wird, dass ein einer elektrischen Göße der Spule des Magnetventils proportionales Signal zur Auslösung eines Alarms genutzt wird oder auch das Überschreiten eines vorbestimmten Zeitraumes zwischen Schaltung des Magnetventiles und Auftreten des Signales.

Aufgabe der Erfindung ist es, ein verbessertes Verfahren zur schnellen Erkennung einer fehlerhaften Funktion einer Niveauregelanlage zu schaffen, womit sich die Fehlerursache zumindest eingrenzen lässt.

Die Aufgabe wird erfindungsgemäß durch die Merkmale des Anspruchs 1 gelöst. Zur Diagnose der Fehlfunktion der Niveauregelanlage ist es notwendig, dass
- das Ventil einen Zustandswechsel durchführt,
- eine die Leistung des Ventils beeinflussende Größe während des Zustandswechsels gemessen wird,
- die gemessene, die Leistung des Ventils beeinflussende Größe in der Steuereinheit mit einer Sollkurve, einem Kennlinienfeld oder einem Grenzwert verglichen wird,
- anhand des Vergleichs in der Steuereinheit ermittelbar ist, ob das Ventil den Zustandswechsel durchgeführt hat.

Jede Niveauregelanlage eines Kraftfahrzeuges weist Ventile auf, welche z.B. in der Druckmittelleitung zwischen der Druckquelle oder der Drucksenke und einem Stellglied als Sperrventile angeordnet sind, um den Zu- und Abfluss von Druckmittel zum bzw. vom Stellglied von der Druckquelle bzw. der Drucksenke steuern zu können. Weiterhin sind so genannte Umschaltventile bekannt, welche die Durchflussrichtung des Druckmittels in den Druckleitungen beeinflussen können. Ist die Niveauregelanlage als Luftfederungsanlage ausgebildet, dann werden die Luftfedern aus Komfortgründen vermehrt mit Zusatzvolumina verbunden, wobei die Zu- und Abschaltung der Verbindung zwischen dem Stellglied "Luftfeder" und dem entsprechenden Zusatzvolumen durch Ventile erfolgt. Aufgrund der schnellen und sicheren Schalttätigkeit werden für die oben genannten Aufgaben vornehmlich Magnetventile in Niveauregelanlagen eingesetzt. Diese Magnetventile werden standardmäßig stromlos geschlossen eingesetzt, es ist aber auch möglich stromlos offene Magnetventile zu verwenden.

Der Vorteil der Erfindung liegt darin, dass eine Fehlfunktion eines Magnetventils in einer Niveauregelanlage sehr schnell und ohne zusätzliche Sensoren erkannt werden kann. Ein fehlerhaftes Magnetventil kann z.B. einen Leitungsbruch in der Magnetspule, einen verklemmten oder festsitzenden Hubanker aufweisen. Die mögliche Reaktionszeit liegt im Millisekundenbereich von z.B. 10ms, mindestens aber innerhalb einer Zeitspanne von 1 Sekunde des beabsichtigten Zustandswechsels von z.B. geschlossen nach geöffnet oder umgekehrt. Es ist also eine sehr schnelle Reaktion der Niveauregelanlage auf eine Fehlfunktion möglich, um mögliche Fahrkritische Situationen oder Beschädigungen des Fahrzeuges oder von Personen durch ungewollte Niveauregelaktionen einer fehlerhaften Niveauregelanlage zu vermeiden. Als Reaktion ist eine eingeschränkte Funktionalität, je nachdem welches Ventil die erkannte Fehlfunktion aufweist, oder eine Außerbetriebnahme der Niveauregelanlage denkbar.

Es ist vorgesehen, dass die die Leistung des Ventils beeinflussende Größe der von dem Ventil aufgenommene Stromverlauf oder der anliegende Spannungsverlauf ist, wobei das Öffnungsverhalten des Ventils aus dem Stromverlauf (I) beim Einschaltvorgang des Ventils und das Schließverhalten des Ventils aus dem Spannungsverlauf (U) beim Ausschaltvorgang des Ventils ermittelt werden. Der Stromverlauf eines Magnetventils weist beim Einschaltvorgang und beim Ausschaltvorgang einen charakteristischen Verlauf auf, welcher von der Steuereinheit mit einfachen Mitteln und mit hoher Genauigkeit ermittelbar ist. Aus dem Stromverlauf beim Einschaltvorgang oder beim Ausschaltvorgang kann mit hinreichender Genauigkeit die fehlerfreie oder fehlerbehaftete Funktion eines Ventils im Vergleich zu einer Sollkurve, einem in der Steuereinheit abgespeicherten Kennlinienfeld oder einem Grenzwert des Stromes, z.B. der Steigung pro Zeiteinheit, erkannt werden.

Gemäß einer Weiterbildung der Erfindung ist vorgesehen, dass der gemessene Stromverlauf des Ventils ein Maß für den Hubweg eines Ankers des Ventils darstellt. Der Anker eines Magnetventils stellt das einzig bewegliche Bauteil dieses dar und ist somit einer besonderen mechanischen Beanspruchung ausgesetzt, z.B. durch Verschleiß, Verklemmung, Verstopfung oder Festfrieren, und ist damit besonders anfällig für eine Fehlfunktion, welche mit der erfindungsgemäßen Weiterbildung der Erfindung nach Anspruch 3 schnell und sicher erkannt werden kann.

Gemäß einer Weiterbildung der Erfindung ist vorgesehen, dass das Öffnungsverhalten des Ventils aus dem Stromverlauf des Ventils während der Anzugsverzugszeit und /oder der Anzugszeit ermittelbar ist. Die Anzugsverzugszeit gibt die Zeit von dem Anlegen der Schaltspannung an das Ventil bis zum Abheben des Ankers vom ersten Ventilsitz wieder. Die Anzugszeit ist ein Maß für den Zeitpunkt, wenn der Anker vom ersten Ventilsitz abhebt, bis zum Zeitpunkt, wenn der Anker den zweiten Ventilsitz erstmals erreicht hat, und der Zustandswechsel des Ventils damit praktisch ausgeführt ist. Der Vorteil dieser Weiterbildung nach Anspruch 4 ist darin zu sehen, dass die Zeit zur Erkennung der Fehlfunktion eines insbesondere stromlos geschlossenen Ventils auf ein Minimum reduziert wird.

Gemäß einer Weiterbildung der Erfindung ist vorgesehen, dass
- das Ventil von seinem geschlossenen Zustand in den geöffneten Zustand überführt wird,
- der Stromverlauf des Ventils während des Einschaltvorgangs gemessen wird,
- der gemessene Stromverlauf in der Steuereinheit mit einer Stromsollkurve, einem Strom-Kennlinienfeld oder einem Strom-Grenzwert verglichen wird,
- anhand des Vergleichs in der Steuereinheit ermittelbar ist, ob das Ventil von dem geschlossenen in den geöffneten Zustand überführt worden ist.

Der Vorteil dieser Weiterbildung ist darin zu sehen, dass die Fehlfunktion eines Ventils einfach und sicher erkannt werden kann und die Zeit zur Erkennung der Fehlfunktion eines stromlos geschlossenen Ventils auf ein Minimum reduziert wird.

Erfindungsgemäß ist vorgesehen, dass die die Leistung des Ventils beeinflussende Größe die an dem Ventil anliegende Spannung ist. Der Spannungsverlauf eines Magnetventils weist beim Ausschaltvorgang einen charakteristischen Verlauf auf, welcher von der Steuereinheit mit einfachen Mitteln und mit hoher Genauigkeit ermittelbar ist. Aus dem Spannungsverlauf beim Ausschaltvorgang kann mit hinreichender Genauigkeit die fehlerfreie oder fehlerbehaftete Funktion eines Ventils im Vergleich zu einer Sollkurve, einem in der Steuereinheit abgespeicherten Kennlinienfeld oder einem Grenzwert der Spannung, z.B. der Steigung pro Zeiteinheit, erkannt werden.

Gemäß einer Weiterbildung der Erfindung ist vorgesehen, dass der gemessene Spannungsverlauf des Ventils ein Maß für den Hubweg eines Ankers des Ventils darstellt. Der Anker eines Magnetventils stellt das einzig bewegliche Bauteil dieses dar und ist somit einer besonderen mechanischen Beanspruchung ausgesetzt, z.B. durch Verschleiß, Verklemmung, Verstopfung oder Festfrieren, und ist damit besonders anfällig für eine Fehlfunktion, welche mit der erfindungsgemäßen Weiterbildung der Erfindung nach Anspruch 7 schnell und sicher erkannt werden kann.

Gemäß einer Weiterbildung der Erfindung ist vorgesehen, dass das Schließverhalten des Ventils aus dem Spannungsverlauf des Ventils während der Abfallverzugszeit und/oder der Abfallzeit ermittelbar ist. Die Abfallverzugszeit gibt die Zeit von dem Trennen der Schaltspannung am Ventil bis zum Abheben des Ankers vom zweiten Ventilsitz wieder. Die Abfallzeit ist ein Maß für den Zeitpunkt, wenn der Anker vom zweiten Ventilsitz abhebt, bis zum Zeitpunkt, wenn der Anker den ersten Ventilsitz erreicht hat, und der Zustandswechsel des Ventils damit praktisch ausgeführt ist. Der Vorteil dieser Weiterbildung nach Anspruch 8 ist darin zu sehen, dass die Zeit zur Erkennung der Fehlfunktion eines insbesondere stromlos geschlossenen Ventils auf ein Minimum reduziert wird.

Gemäß einer Weiterbildung der Erfindung ist vorgesehen, dass das Schließverhalten des Ventils aus dem gemessenen Spannungsverlauf und dem gemessenen Stromverlauf während des Ausschaltvorgangs des Ventils ermittelbar ist. Der Vorteil der erfindungsgemäßen Weiterbildung ist darin zu sehen, dass die Abfallverzugszeit und/oder die Abfallzeit des Ventils bzw. des Ankers des Ventils sehr genau ermittelt werden können, da der Zeitpunkt des Abhebens des Ankers vom zweiten Ventilsitz mit Hilfe des Stromverlauf sehr genau bestimmbar ist.

Gemäß einer Weiterbildung der Erfindung ist vorgesehen, dass
- das Ventil von seinem geöffneten Zustand in den geschlossenen Zustand überführt wird,
- der Spannungsverlauf während des Ausschaltens des Ventils gemessen wird,
- der gemessene Spannungsverlauf in der Steuereinheit mit einer Spannungssollkurve, einem Spannungs-Kennlinienfeld oder einem Spannungs-Grenzwert verglichen wird,
- anhand des Vergleichs in der Steuereinheit ermittelbar ist, ob das Ventil von dem geöffneten in den geschlossenen Zustand überführt worden ist.

Der Vorteil dieser Weiterbildung ist darin zu sehen, dass die Fehlfunktion eines Ventils einfach und sicher erkannt werden kann und die Zeit zur Erkennung der Fehlfunktion eines stromlos geschlossenen Ventils auf ein Minimum reduziert wird.

Erfindngsgemäß ist vorgesehen, dass das Öffnungsverhalten des Ventils aus dem Stromverlauf beim Einschaltvorgang des Ventils und das Schließverhalten des Ventils aus dem Spannungsverlauf beim Ausschaltvorgang des Ventils ermittelbar sind. Der Vorteil ist darin zu sehen, dass beide wesentlichen Funktionen des Ventils, Einschalten und Ausschalten, sicher und schnell hinsichtlich einer Fehlfunktion diagnostiziert werden können. Das einwandfreie Einschalten und damit die Funktion eines Ventils kann z.B. durch ein Verklemmen des Ankers oder einen festgefrorenen Anker oder dgl. verhindert werden. Das einwandfreie Abschalten und damit die Funktion eines Ventils kann z.B. durch ein Verklemmen des Ankers oder einen verstopften Ventilsitz oder dgl. verhindert werden.

Gemäß einer Weiterbildung der Erfindung ist vorgesehen, dass die Diagnose des Öffnungs- und Schließverhaltens des Ventils während eines Niveauregelvorganges erfolgt. Der Vorteil dieser Weiterbildung ist darin zu sehen, dass keine besonderen und zusätzlichen Regelvorgänge für die Diagnose der Funktionalität der Niveauregelanlage durchgeführt werden müssen. Weiterhin ist sichergestellt, dass eine entsprechende Diagnose in regelmäßigen Abständen zumindest aber immer dann erfolgt, wenn eine Niveauregelaktion durchgerührt werden soll.

Gemäß einer Weiterbildung der Erfindung ist vorgesehen, dass das Ein- und/oder Ausschalten des Ventils kurzzeitig erfolgt. Der Vorteil dieser Weiterbildung ist darin zu sehen, dass auch bei einem nur kurzzeitigen Betrieb eines Ventils und/oder der Niveauregelanlage eine Fehlfunktion dieser sicher und schnell erkannt werden kann.

Gemäß einer Weiterbildung der Erfindung ist vorgesehen, dass das Ein- und/oder Ausschalten des Ventils nur zu Diagnosezwecken erfolgt. Der Vorteil dieser Weiterbildung ist darin zu sehen, dass die Funktionsfähigkeit und zu bestimmten und ggf. regelmäßig wiederkehrenden Zeitpunkten und unabhängig von anderen Funktionen durchgeführt werden kann. Z.B. kann eine erfindungsgemäße Diagnose der Niveauregelanlage vor oder nach jedem Niveauregelvorgang, einmal pro Tag oder jedes Mal vor Fahrtbeginn durchgeführt werden.

Gemäß einer Weiterbildung der Erfindung ist vorgesehen, dass das Ein- und/oder Ausschalten des Ventils direkt nach dem Einschalten der Zündung des Kraftfahrzeuges erfolgt. Der Vorteil dieser Weiterbildung ist darin zu sehen, dass die Funktion der Niveauregelanlage vor oder bei jeder Inbetriebnahme des Kraftfahrzeuges überprüft wird. Damit wird sichergestellt, dass von der Niveauregelanlage infolge einer Fehlfunktion keine ungewollten Niveauregelvorgänge durchgeführt werden können.

Ausführungsbeispiele und weitere Vorteile der Erfindung werden im Zusammenhang mit den nachstehenden Figuren erläutert, darin zeigen:
Fig.1 eine Niveauregelanlage in schematischer Darstellung und
Fig.2 ein Diagramm.

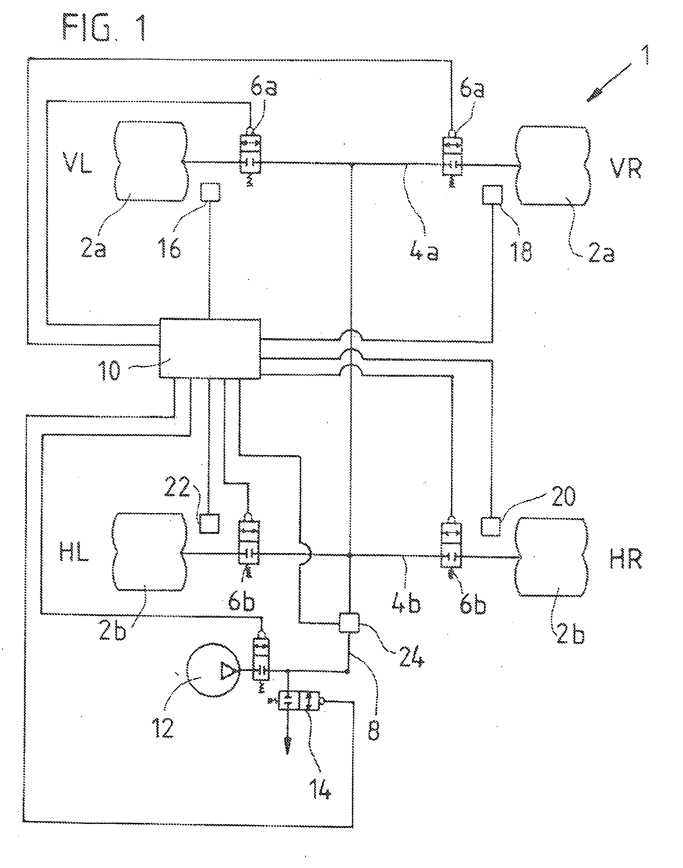

Figur 1 zeigt in stark schematisierter Darstellung eine Niveauregelanlage 1 für ein Kraftfahrzeug, wobei nur die für die nachfolgenden Erläuterungen notwendigen Bestandteile gezeigt sind. Derartige Niveauregelanlagen 1 sind an sich bekannt, so dass diese hier nur kurz erläutert werden sollen. Die Niveauregelanlage 1 verfügt über Luftfedern 2a, die der Vorderachse des Kraftfahrzeuges zugeordnet sind, und über Luftfedern 2b, die der Hinterachse des Kraftfahrzeuges zugeordnet sind. Mit den Luftfedern 2a, 2b ist ein (nicht gezeigter) Fahrzeugaufbau des Kraftfahrzeuges federnd gelagert. Die Luftfedern 2a stehen über eine Querleitung 4a und die Luftfedern 2b stehen über eine Querleitung 4b miteinander in Verbindung. Jede Querleitung 4a, 4b enthält jeweils zwei Quersperrventile 6a, 6b, von denen jeweils eins einer Luftfeder 2a, 2b zugeordnet ist. Darüber hinaus stehen die Querleitungen 4a, 4b mit einer weiteren Leitung 8 in Verbindung, über die die Luftfedern 2a, 2b mit Druckluft befiillt bzw. über die Druckluft aus den Luftfedern 2a, 2b abgelassen wird.

Zum Auffüllen der Luftfedern 2a, 2b werden die Quersperrventile 6a, 6b und das Ventil 32 von der Steuereinheit 10 der Niveauregelanlage angesteuert, so dass diese von dem in der Figur 1 gezeigten Grundzustand in ihren anderen Schaltzustand übergehen und die Querleitungen 4a und 4b "durchschalten". Daraufhin wird der Kompressor 12 von der Steuereinheit 10 angesteuert, so dass dieser Druckluft in die Luftfedern 2a, 2b fördert. Zum Abbruch des Auffüllvorganges wird der Kompressor 12 von der Steuereinheit 10 gestoppt und die Quersperrventile 6a, 6b und das Ventil 32 werden von der Steuereinheit 10 angesteuert, so dass sie den in der Figur 1 gezeigten Grundzustand einnehmen.

Zum Ablassen von Druckluft aus den Luftfedern 2a, 2b werden von der Steuereinheit 10 die Quersperrventile 6a, 6b angesteuert, so dass sie von dem in der Figur 1 gezeigten Grundzustand in den geöffneten Schaltzustand übergehen. Darüber hinaus wird von der Steuereinheit 10 das Ablassventil 14 angesteuert, so dass dieses von dem in der Figur 1 gezeigten Grundzustand in den geöffneten Schaltzustand übergeht, in dem es die Leitung 8 mit der Atmosphäre verbindet. Die Luftfedern 2a, 2b sind dann über die Quersperrleitungen 4a, 4b und über die Leitung 8 mit der Atmosphäre verbunden, so dass Druckluft aus ihnen abgelassen wird. Um einen Ablassvorgang zu beenden bzw. abzubrechen, werden die Quersperrventile 6a, 6b und das Ablassventil 14 von der Steuereinheit 10 geschlossen, so dass diese dann wieder in den in der Figur 1 gezeigten Grundzustand übergehen.

Aufgrund unterschiedlicher Achslasten und infolgedessen unterschiedlichem Druck in den Luftfedern erfolgt das Auffüllen bzw. Ablassen bevorzugt Achsweise.

Durch entsprechende Ansteuerung der Quersperrventile 6a, 6b und des Ablassventils 14 ist es ebenfalls möglich, Druckluft aus einer Luftfeder bzw. aus einer beliebigen Kombination von Luftfedern (beispielsweise den Luftfedern, die einer Achse zugeordnet sind) abzulassen. Um Druckluft aus der Luftfeder 2b, die der Radposition "hinten links" zugeordnet ist, abzulassen, muss beispielsweise das dieser Luftfeder 2b zugeordnete Quersperrventil 6b und das Ablassventil 14 von dem in der Figur 1 gezeigten Grundzustand in den geöffneten Schaltzustand überführt werden. Soll zusätzlich Luft aus der Luftfeder 2b, die der Radposition "hinten rechts" zugeordnet ist, so muss zusätzlich das dieser Luftfeder 2b zugeordnete Quersperrventil 6b von dem in der Figur 1 gezeigten und geschlossenen Grundzustand in den anderen, geöffneten Schaltzustand überführt werden.

Über die bisher genannten Bestandteile hinaus verfügt die Niveauregelanlage über Höhensensoren 16, 18, 20 und 22, von denen jeweils einer einer Luftfeder 2a, 2b der Niveauregelanlage zugeordnet ist. Mit Hilfe des Höhensensors 16 kann jederzeit das aktuelle Niveau des Fahrzeugaufbaus im Bereich der Radposition "vorne links" gegenüber einem Bezugspunkt gemessen werden. Entsprechendes gilt für die Höhensensoren 18, 20 und 22. Das von den Höhensensoren 16, 18, 20 und 22 gemessene aktuelle Niveau wird von diesen an die Steuereinheit 10 der Niveauregelanlage übermittelt und dort ausgewertet. In der Steuereinheit 10 sind also zu jedem Zeitpunkt Informationen darüber verfügbar, welches aktuelle Niveau der Fahrzeugaufbau im Bereich der Radpositionen des Kraftfahrzeuges gegenüber einem vorgegebenen Bezugspunkt einnimmt. Darüber hinaus kann in der Steuereinheit 10 ermittelt werden, welches aktuelle Niveau der Fahrzeugaufbau gegenüber einer Achse des Kraftfahrzeuges im Mittel einnimmt, indem die Messwerte der entsprechenden Höhensensoren gemittelt werden. Soll beispielsweise das Niveau des Fahrzeugaufbaus gegenüber der Hinterachse bestimmt werden, so werden in der Steuereinheit 10 die Messwerte gemittelt, die von den Höhensensoren 20 und 22 an die Steuereinheit 10 übermittelt worden sind.

In der Steuereinheit 10 wird laufend überprüft, ob das aktuelle Niveau des Fahrzeugaufbaus im Bereich einer Radposition bzw. das aktuelle Niveau des Fahrzeugaufbaus gegenüber einer Achse des Kraftfahrzeuges mit einem vorgegebenen, in der Steuereinheit 10 gespeicherten Niveau übereinstimmt (als aktuelles Niveau wird das zuletzt in der Steuereinheit 10 anhand der von den Höhensensoren 16, 18, 20 und 22 übermittelten Messsignale verstanden). Liegt das aktuelle Niveau oberhalb des in der Steuereinheit 10 gespeicherten vorgegebenen Niveaus, so leitet die Steuereinheit 10 einen Ablassvorgang ein. Dazu werden die entsprechenden Quersperrventile 6a, 6b und das Ablassventil 14, wie oben bereits erläutert, geschaltet. Der Ablassvorgang ist beendet, wenn die Steuereinheit 10 feststellt, dass das aktuelle Niveau dem in der Steuereinheit 10 gespeicherten vorgegebenen Niveau entspricht. Die Steuereinheit 10 führt dann die entsprechenden Quersperrventile 6a, 6b und das Ablassventil 14 wieder in den in der Figur 1 gezeigten Grundzustand über.

Es kann auch vorkommen, dass die Steuereinheit 10 feststellt, dass sich das Niveau des Fahrzeugaufbaus während eines Ablassvorganges nicht wie erwartet absenkt, weil sich das Kraftfahrzeug in einer kritischen Situation befindet. In diesem Fall bricht die Steuereinheit 10 den Ablassvorgang ab, wie dies weiter unten im Einzelnen erläutert wird.

Die Niveauregelanlage enthält gegebenenfalls schließlich einen Drucksensor 24, mit dem der Luftdruck in jeder einzelnen Luftfeder 2a, 2b der Niveauregelanlage messbar ist. Zur Messung des Luftdruckes in der Luftfeder 2b, die der Radposition "hinten links" zugeordnet ist, wird das dieser Luftfeder 2b zugeordnete Quersperrventil 6b von dem in der Figur 1 gezeigten, geschlossenen Grundzustand durch die Steuereinheit in den anderen, geöffneten Schaltzustand überführt, wohingegen alle anderen Ventile der Niveauregelanlage in dem in der Figur 1 gezeigten Grundzustand bleiben. In diesem Fall liegt an dem Drucksensor 24 der in der Luftfeder 2b, die der Radposition am "hinten links" zugeordnet ist, herrschende statische Luftdruck an. Entsprechend ist der Luftdruck in den anderen Luftfedern der Niveauregelanlage messbar. Das jeweilige Messergebnis des Drucksensors 24 wird an die Steuereinheit 10 übermittelt. Das übermittelte Messergebnis wird in der Steuereinheit der Luftfeder 2a, 2b zugeordnet, deren Quersperrventil 6a, 6b sie angesteuert hat, und ausgewertet. Wie dies im Einzelnen erfolgt, wird weiter unten näher erläutert.

Jeder Ventil 6a, 6b, 14 ist über eine Steuerleitung mit der Steuereinheit 10 verbunden. Über die entsprechende Steuerleitung wird jedes Ventil 6a, 6b, 14 für den Betrieb und einen Wechsel der Schaltstellung mit Spannung und Strom versorgt. Die an das Ventil 6a, 6b, 14 angelegte Spannung und der von jedem Ventil 6a, 6b, 14 aufgenommene Strom können von der Steuereinheit 10 bestimmt und ermittelt werden. Weiterhin kann in der Steuereinheit 10 eine Sollkurve, ein Kennlinienfeld und/oder mindestens ein Grenzwert für die Spannung und den Strom eines jeden Ventils 6a, 6b, 14 abgespeichert sein.

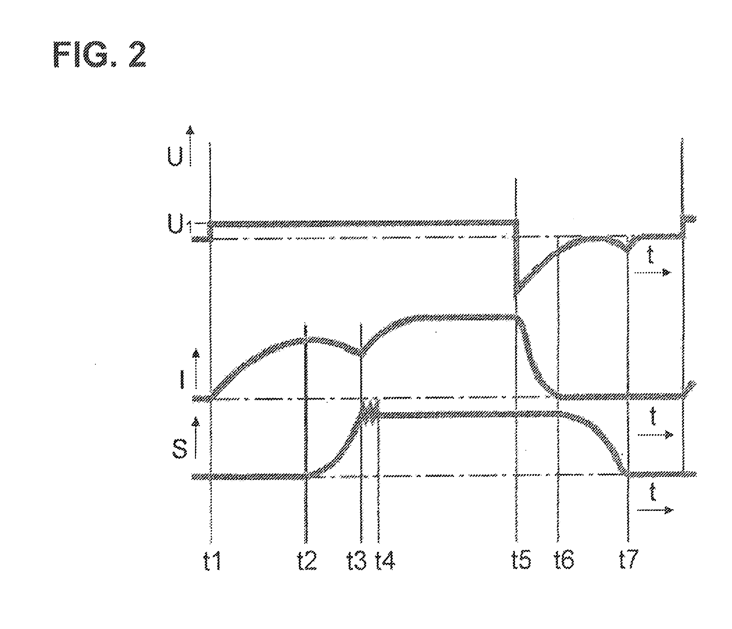

Im Zusammenhang mit Figur 2, welche die charakteristischen Kennlinien eines beispielsweise stromlos geschlossenen oder stromlos offenen Magnetventils in Diagrammform zeigt, wird im Folgenden erläutert, wie ein Diagnoseverfahren mit Hilfe der in der Figur 1 gezeigten Steuereinheit 10 durchgeführt wird. In dem Diagramm sind der Verlauf der Spannung U, des Stroms 1 und des Ankerweges S eines Magnetventils über der Zeit aufgetragen.

Zu einem ersten Zeitpunkt t1 wird eine Spannung U1 angelegt. Aufgrund der Massenträgheit des Ankers des Ventils und der eventuell vorhandenen und auf den Anker des Ventils wirkenden Federkraft dauert es bis zum Zeitpunkt t2 bis der Anker von dem ersten Ventilsitz erstmals abhebt. Der Strom steigt vom Zeitpunkt t1 bis zum Zeitpunkt t2, der so genannten Anzugsverzugszeit, kontinuierlich an und erreicht zum Zeitpunkt t2 einen lokalen Maximalwert. Vom Zeitpunkt t2 bis zum Zeitpunkt t3, der so genannten Anzugszeit, hebt der Anker des Ventils vom ersten Ventilsitz ab und wird bis zum zweiten Ventilsitz bewegt, wobei das Ventil einen Wechsel seines Schalt-Zustandes durchgeführt hat und wobei der Strom in diesem Zeitraum kontinuierlich absinkt und zum Zeitpunkt t3 ein lokales Minimum erreicht.

Der Stromverlauf vom Zeitpunkt t1 bis zum Zeitpunkt t3 weist bei einem einwandfreien und funktionsfähigem Magnetventil einen charakteristischen Verlauf auf. Ist die Funktion des Ventils, insbesondere das vollständige Öffnen und aufliegen des Ankers auf dem zweiten Ventilsitz, beeinträchtigt, dann weichen die gemessenen Werte für das lokale Maximum und das lokale Minimum des Stroms von den Sollwerten eines einwandfreien Ventils deutlich ab und können für die Diagnose der Funktionsfähigkeit des Ventils herangezogen werden.

Vom Zeitpunkt t3 bis zum Zeitpunkt t4, der Prellzeit, kann der Anker ggf. mehrfach gegen den zweiten Ventilsitz "prellen", wobei die Stromaufnahme des Ventil bereits wieder kontinuierlich ansteigt. Nach der Prellzeit liegt der Anker des Ventils solange am zweiten Ventilsitz an, wie die Spannung U1 am Ventil anliegt, in diesem Fall ist das bis zum Zeitpunkt t5.

Zum Zeitpunkt t5 wird die Versorgungs-Spannung vom Ventil getrennt und fällt sehr stark bis zu einem lokalen Minimum aufgrund von Gegeninduktion ab. Danach steigt die Spannung kontinuierlich an, wobei nach einer bestimmten Zeit, hier Zeitpunkt t6, der Anker des Ventils vom zweiten Ventilsitz abhebt und kontinuierlich bis zum ersten Ventilsitz bewegt wird. Dabei erreicht die Spannung ein lokales Maximum und fällt zum Zeitpunkt t7, wenn der Anker des Ventils auf dem ersten Ventilsitz aufliegt, auf ein lokales Minimum zurück. Das lokale Maximum und das lokale Minimum des Spannungsverlaufs sind charakteristische Größen bei einem einwandfreien und funktionsfähigen Ventil. Ist die Funktion des Ventils, insbesondere das vollständige Schließen und aufliegen des Ankers auf dem ersten Ventilsitz, beeinträchtigt, dann weichen die gemessenen Werte für das lokale Maximum und das lokale Minimum der Spannung von den Sollwerten eines einwandfreien Ventils deutlich ab und können für die Diagnose der Funktionsfähigkeit des Ventils herangezogen werden.

Beim Abschaltvorgang des Magnetventils ist es zusätzlich möglich, den Stromverlauf vom Zeitpunkt t5 bis zum Zeitpunkt t6 zur Diagnose der Funktionsfähigkeit des Ventils heranzuziehen, denn erst zum Zeitpunkt t6, wenn der Stromverlauf nahezu den Wert Null erreicht hat, hebt der Anker von dem zweiten Ventilsitz ab. Diese Information verbessert die Diagnose der Funktionsfähigkeit des Ventils und liefert genauere Ergebnisse, da der Hubweg des Ankers von Anfang bis Ende anhand des Strom- und des Spannungsverlaufs verifiziert werden kann.

Jedes Magnetventil weist einen derartigen charakteristischen Verlauf für Spannung und Strom auf, so dass die Funktionalität des Ventils durch die Messung von Spannung und/oder Strom während des Einschalt- und/oder Ausschaltvorganges im Vergleich zu einer entsprechenden Sollkennlinie, einem Kennlinienfeld oder eines Grenzwertes beurteilt und ermittelt werden kann. Weicht ein gemessener Spannungs- und/oder Stromverlauf von den entsprechenden Sollwerten zu stark ab, dann hat sich der Anker des Ventils mit sehr großer Wahrscheinlichkeit nicht oder nicht richtig geöffnet oder ist nicht bzw. nicht richtig geschlossen worden.

Die korrekte Funktion eines stromlos geschlossenen oder stromlos offenen Magnetventils während des Einschaltvorgangs kann durch den Stromverlauf zwischen den Zeitpunkten t1 bis t4 sicher ermittelt werden. Die korrekte Funktion eines stromlos geschlossenen oder stromlos offenen Magnetventils während des Abschalt- oder Ausschaltvorgangs durch den Spannungsverlauf und ggf. unter Hinzuziehung des Stromverlaufs zwischen den Zeitpunkten t5 bis t7 sicher ermittelt werden kann.

Die im Diagramm der Fig.2 dargestellten Kennlinien sind für ein stromlos geschlossenes Magnetventil im Bereich von t1 bis t4 für das Einschalt- und Öffnungsverhalten und im Bereich von t5 bis t7 für das Abschalt- und Schließverhalten heranzuziehen. Bei einem stromlos offenen Magnetventil sind die im Diagramm der Fig. 2 dargestellten Kennlinien im Bereich von t1 bis t4 für das Einschalt- und Schließverhalten und im Bereich von t5 bis t7 für das Abschalt- und Öffnungsverhalten heranzuziehen.

### Bezugszeichenliste

### (Teil der Beschreibung)

- 1 -: Niveauregelanlage
- 2a, 2b -: Luftfeder
- 4a, 4b -: Leitung
- 6a, 6b -: Ventil
- 8 -: Leitung
- 10 -: Steuereinheit
- 12 -: Kompressor
- 14 -: Ablassventil
- 16, 18, 20, 22 -: Höhensensor
- 24 -: Drucksensor
- 26 -: Ventil
- t1 -: erster Zeitpunkt
- t2 -: zweiter Zeitpunkt
- t3 -: dritter Zeitpunkt
- t4 -: vierter Zeitpunkt
- t5 -: fünfter Zeitpunkt
- t6 -: sechster Zeitpunkt
- t7 -: siebter Zeitpunkt
- U -: Spannung
- U1 -: Spannungswert
- I -: Strom
- S -: Weg (des Ankers)

## Patentansprüche

1. Verfahren zur Diagnose der Funktion einer Niveauregelanlage (1) eines Kraftfahrzeuges mit mindestens einem Ventil (2a, 2b, 14, 26), wobei bei geöffnetem Ventil (2a, 2b, 14, 26) ein Austausch von Druckmittel von der einen Seite des Ventils zu der anderen Seite des Ventils möglich ist und bei geschlossenem Ventil (2a, 2b, 14, 26) ein Austausch von Druckmittel unterbunden wird, und mit einer Steuereinheit (10), wobei
- das Ventil (2a, 2b, 14, 26) einen Zustandswechsel durchführt,
- der von dem Ventil (2a, 2b, 14, 26) aufgenommene Stromverlauf (I) über der Zeit oder der an dem Ventil (2a, 2b, 14, 26) anliegende Spannungsverlauf (U) über der Zeit als eine die Leistung des Ventils (2a, 2b, 14, 26) beeinflussende Größe (U, I) während des Zustandswechsels gemessen wird,
- die gemessene, die Leistung des Ventils (2a, 2b, 14, 26) beeinflussende Größe (U, I) in der Steuereinheit (10) mit einer Sollkurve, einem Kennlinienfeld oder Grenzwert verglichen wird,
- anhand des Vergleichs in der Steuereinheit (10) ermittelbar ist, ob das Ventil (2a, 2b, 14, 26) den Zustandswechsel durchgeführt hat
**dadurch gekennzeichnet, dass** das Öffnungsverhalten des Ventils (2a, 2b, 14, 26) aus dem Stromverlauf (I) beim Einschaltvorgang des Ventils (2a, 2b, 14, 26) und das Schließverhalten des Ventils (2a, 2b, 14, 26) aus dem Spannungsverlauf (U) beim Ausschaltvorgang des Ventils (2a, 2b, 14, 26) ermittelt werden.

2. Verfahren nach Anspruch 1 **dadurch gekennzeichnet, dass** der gemessene Stromverlauf (I) des Ventils (2a, 2b, 14, 26) ein Maß für den Hubweg (S) eines Ankers des Ventils (2a, 2b, 14, 26) darstellt.

3. Verfahren nach Anspruch 1 oder 2, **dadurch gekennzeichnet, dass** das Öffnungsverhalten des Ventils (2a, 2b, 14, 26) aus dem Stromverlauf (I) des Ventils (2a, 2b, 14, 26) während der Anzugsverzugszeit und /oder der Anzugszeit ermittelbar ist.

4. Verfahren nach einem der Ansprüche 1 bis 3, **dadurch gekennzeichnet, dass**
- das Ventil (2a, 2b, 14, 26) von seinem geschlossenen Zustand in den geöffneten Zustand überführt wird,
- der Stromverlauf (I) des Ventils (2a, 2b, 14, 26) während des Einschaltvorgangs gemessen wird,
- der gemessene Stromverlauf (I) in der Steuereinheit (10) mit einer Stromsollkurve, einem Strom-Kennlinienfeld oder einem Strom-Grenzwert verglichen wird,
- anhand des Vergleichs in der Steuereinheit (10) ermittelbar ist, ob das Ventil (2a, 2b, 14, 26) von dem geschlossenen in den geöffneten Zustand überführt worden ist.

5. Verfahren nach Anspruch 1, **dadurch gekennzeichnet, dass** der gemessene Spannungsverlauf (U) des Ventils (2a, 2b, 14, 26) ein Maß für den Hubweg (S) eines Ankers des Ventils (2a, 2b, 14, 26) darstellt.

6. Verfahren nach Anspruch 5, **dadurch gekennzeichnet, dass** das Schließverhalten des Ventils (2a, 2b, 14, 26) aus dem Spannungsverlauf (U) des Ventils (2a, 2b, 14, 26) während der Abfallverzugszeit und/oder der Abfallzeit ermittelbar ist.

7. Verfahren nach einem der Ansprüche 5 oder 6, **dadurch gekennzeichnet, dass** das Schließverhalten des Ventils (2a, 2b, 14, 26) aus dem gemessenen Spannungsverlauf (U) und dem gemessenen Stromverlauf (I) während des Ausschaltvorgangs des Ventils (2a, 2b, 14, 26) ermittelbar ist.

8. Verfahren nach einem der Ansprüche 5 bis 7, **dadurch gekennzeichnet, dass**
- das Ventil (2a, 2b, 14, 26) von seinem geöffneten Zustand in den geschlossenen Zustand überführt wird,
- der Spannungsverlauf (U) während des Ausschaltens des Ventils (2a, 2b, 14, 26) gemessen wird,
- der gemessene Spannungsverlauf (U) in der Steuereinheit (10) mit einer Spannungssollkurve, einem Spannungs-Kennlinienfeld oder einem Spannungs-Grenzwert verglichen wird,
- anhand des Vergleichs in der Steuereinheit (10) ermittelbar ist, ob das Ventil (2a, 2b, 14, 26) von dem geöffneten in den geschlossenen Zustand überführt worden ist.

9. Verfahren nach einem der vorherigen Ansprüche, **dadurch gekennzeichnet, dass** die Diagnose des Öffnungs- und Schließverhaltens des Ventils (2a, 2b, 14, 26) während eines Niveauregelvorganges erfolgt.

10. Verfahren nach einem der vorherigen Ansprüche, **dadurch gekennzeichnet, dass** das Ein- und/oder Ausschalten des Ventils (2a, 2b, 14, 26) kurzzeitig erfolgt.

11. Verfahren nach Anspruch 10, **dadurch gekennzeichnet, dass** das Ein- und/oder Ausschalten des Ventils (2a, 2b, 14, 26) nur zu Diagnosezwecken erfolgt.

12. Verfahren nach Anspruch 10 oder 11, **dadurch gekennzeichnet, dass** das Ein- und/oder Ausschalten des Ventils (2a, 2b, 14, 26) direkt nach dem Einschalten der Zündung des Kraftfahrzeuges erfolgt.

## Claims

1. Method for diagnosing the functioning of a level control system (1) of a motor vehicle, comprising at least one valve (2a, 2b, 14, 26), an exchange of pressure medium from the one side of the valve to the other side of the valve being possible when the valve (2a, 2b, 14, 26) is open and an exchange of pressure medium being prevented when the valve (2a, 2b, 14, 26) is closed, and comprising a control unit (10),
- the valve (2a, 2b, 14, 26) performing a change of state,
- the electric current progression (I) consumed over time by the valve (2a, 2b, 14, 26) or the voltage progression (U) applied over time to the valve (2a, 2b, 14, 26) being measured as a quantity (U, I) influencing the output of the valve (2a, 2b, 14, 26) during the change of state,
- in the control unit (10), the measured quantity (U, I) influencing the output of the valve (2a, 2b, 14, 26) being compared with a reference curve, a family of characteristics or a limit valve,
- it can be ascertained in the control unit (10), on the basis of the comparison, whether the valve (2a, 2b, 14, 26) having performed the change of state,
**characterized in that** the opening behaviour of the valve (2a, 2b, 14, 26) can be ascertained from the electric current progression (I) during the switching-on operation of the valve (2a, 2b, 14, 26) and the closing behaviour of the valve (2a, 2b, 14, 26) is ascertained from the voltage progression (U) during the switching-off operation of the valve (2a, 2b, 14, 26).

2. Method according to Claim 1, **characterized in that** the measured electric current progression (I) of the valve (2a, 2b, 14, 26) constitutes a measure of the travel (S) of an armature of the valve (2a, 2b, 14, 26).

3. Method according to Claim 1 or 2, **characterized in that** the opening behaviour of the valve (2a, 2b, 14, 26) can be ascertained from the electric current progression (I) of the valve (2a, 2b, 14, 26) during the pickup delay time and/or the pickup time.

4. Method according to any one of Claims 1 to 3, **characterized in that**
- the valve (2a, 2b, 14, 26) is brought from its closed state into the open state,
- the electric current progression (I) of the valve (2a, 2b, 14, 26) is measured during the switching-on operation,
- in the control unit (10), the measured electric current progression (I) is compared with an electric current reference curve, a family of electric current characteristics or an electric current limit value,
- it can be ascertained in the control unit (10), on the basis of the comparison, whether the valve (2a, 2b, 14, 26) has been brought from the closed into the open state.

5. Method according to Claim 1, **characterized in that** the measured voltage progression (U) of the valve (2a, 2b, 14, 26) constitutes a measure of the travel (S) of an armature of the valve (2a, 2b, 14, 26).

6. Method according to Claim 5, **characterized in that** the closing behaviour of the valve (2a, 2b, 14, 26) can be ascertained from the voltage progression (U) of the valve (2a, 2b, 14, 26) during the dropout delay time and/or the dropout time.

7. Method according to either of Claims 5 or 6, **characterized in that** the closing behaviour of the valve (2a, 2b, 14, 26) can be ascertained from the measured voltage progression (U) and the measured electric current progression (I) during the switching-off operation of the valve (2a, 2b, 14, 26).

8. Method according to any one of Claims 5 to 7, **characterized in that**
- the valve (2a, 2b, 14, 26) is brought from its open state into the closed state,
- the voltage progression (U) is measured during the switching-off of the valve (2a, 2b, 14, 26),
- in the control unit (10), the measured voltage progression (U) is compared with a voltage reference curve, a family of voltage characteristics or a voltage limit value,
- it can be ascertained in the control unit (10), on the basis of the comparison, whether the valve (2a, 2b, 14, 26) has been brought from the open into the closed state.

9. Method according to any one of the preceding claims, **characterized in that** the diagnosis of the opening and closing behaviour of the valve (2a, 2b, 14, 26) is effected during a level control operation.

10. Method according to any one of the preceding claims, **characterized in that** the switching-on and/or switching-off of the valve (2a, 2b, 14, 26) is effected transiently.

11. Method according to Claim 10, **characterized in that** the switching-on and/or switching-off of the valve (2a, 2b, 14, 26) is effected only for diagnostic purposes.

12. Method according to Claim 10 or 11, **characterized in that** the switching-on and/or switching-off of the valve (2a, 2b, 14, 26) is effected directly after the switching-on of the ignition of the motor vehicle.

## Revendications

1. Procédé pour diagnostiquer le fonctionnement d'une installation de réglage de niveau (1) d'un véhicule, comprenant au moins une soupape (2a, 2b, 14, 26), un remplacement de l'agent de pression par l'un des côtés de la soupape vers l'autre côté de la soupape étant possible lorsque la soupape (2a, 2b, 14, 26) est ouverte et un remplacement de l'agent de pression étant interdit lorsque la soupape (2a, 2b, 14, 26) est fermée, et une unité de commande (10),
- la soupape (2a, 2b, 14, 26) effectuant un changement d'état,
- le tracé de courant (I) réceptionné par la soupape (2a, 2b, 14, 26) étant mesuré en fonction du temps ou bien le tracé de tension (U) s'appliquant sur la soupape (2a, 2b, 14, 26) étant mesuré en fonction du temps sous la forme d'une grandeur (U, I) influençant la puissance de la soupape (2a, 2b, 14, 26) pendant le changement d'état,
- la grandeur (U, I) mesurée et influençant la puissance de la soupape (2a, 2b, 14, 26) étant comparée dans l'unité de commande (10) avec une courbe théorique, un champ de courbes caractéristiques ou une valeur limite,
- le fait de savoir si la soupape (2a, 2b, 14, 26) a effectué le changement d'état pouvant être déterminé à l'aide de la comparaison dans l'unité de commande (10), **caractérisé en ce que** le comportement à l'ouverture de la soupape (2a, 2b, 14, 26) est déterminé à partir du tracé de courant (I) lors de l'opération de mise en marche de la soupape (2a, 2b, 14, 26) et le comportement à la fermeture de la soupape (2a, 2b, 14, 26) est déterminé à partir du tracé de tension (U) lors de l'opération de mise hors marche de la soupape (2a, 2b, 14, 26).

2. Procédé selon la revendication 1, **caractérisé en ce que** le tracé de courant (I) mesuré de la soupape (2a, 2b, 14, 26) représente un critère pour la course de levage (S) d'un induit de la soupape (2a, 2b, 14, 26).

3. Procédé selon la revendication 1 ou 2, **caractérisé en ce que** le comportement à l'ouverture de la soupape (2a, 2b, 14, 26) peut être déterminé à partir du tracé de courant (I) de la soupape (2a, 2b, 14, 26) pendant la temporisation d'actionnement et/ou le temps d'actionnement.

4. Procédé selon l'une quelconque des revendications 1 à 3, **caractérisé en ce que**
- la soupape (2a, 2b, 14, 26) est transférée de son état fermé dans l'état ouvert,
- le tracé de courant (I) de la soupape (2a, 2b, 14, 26) est mesuré pendant l'opération de mise en marche,
- le tracé de courant (I) mesuré est comparé dans l'unité de commande (10) avec une courbe théorique de courant, un champ de courbes caractéristiques de courant ou une valeur limite de courant,
- on peut déterminer à l'aide de la comparaison dans l'unité de commande (10) si la soupape (2a, 2b, 14, 26) a été transférée de l'état fermé dans l'état ouvert.

5. Procédé selon la revendication 1, **caractérisé en ce que** le tracé de tension (U) mesuré de la soupape (2a, 2b, 14, 26) représente un critère pour la course de levage (S) d'un induit de la soupape (2a, 2b, 14, 26) .

6. Procédé selon la revendication 5, **caractérisé en ce que** le comportement à la fermeture de la soupape (2a, 2b, 14, 26) peut être déterminé à partir du tracé de tension (U) de la soupape (2a, 2b, 14, 26) pendant la temporisation de retombée et/ou le temps de retombée.

7. Procédé selon l'une quelconque des revendications 5 ou 6, **caractérisé en ce que** le comportement à la fermeture de la soupape (2a, 2b, 14, 26) peut être déterminé à partir du tracé de tension (U) mesuré et du tracé de courant (I) mesuré pendant l'opération de mise hors marche de la soupape (2a, 2b, 14, 26).

8. Procédé selon l'une quelconque des revendications 5 à 7, **caractérisé en ce que**
- la soupape (2a, 2b, 14, 26) est transférée de son état ouvert dans l'état fermé,
- le tracé de tension (U) est mesuré pendant la mise hors marche de la soupape (2a, 2b, 14, 26),
- le tracé de tension (U) mesuré est comparé dans l'unité de commande (10) avec une courbe théorique de tension, un champ de courbes caractéristiques de tension ou une valeur limite de tension,
- on peut déterminer à l'aide de la comparaison dans l'unité de commande (10) si la soupape (2a, 2b, 14, 26) a été transférée de l'état ouvert à l'état fermé.

9. Procédé selon l'une quelconque des revendications précédentes, **caractérisé en ce que** le diagnostic du comportement à l'ouverture et à la fermeture de la soupape (2a, 2b, 14, 26) s'effectue pendant une opération de réglage de niveau.

10. Procédé selon l'une quelconque des revendications précédentes, **caractérisé en ce que** la mise en marche et/ou la mise hors marche de la soupape (2a, 2b, 14, 26) s'effectue à court terme.

11. Procédé selon la revendication 10, **caractérisé en ce que** la mise en marche et/ou la mise hors marche de la soupape (2a, 2b, 14, 26) ne s'effectue qu'à des fins de diagnostic.

12. Procédé selon la revendication 10 ou 11, **caractérisé en ce que** la mise en marche et/ou la mise hors marche de la soupape (2a, 2b, 14, 26) s'effectue directement après la mise en marche de l'allumage du véhicule.
